# EUROPEAN PATENT SPECIFICATION

(11) **EP 4 023 441 B1**
(45) Date of publication and mention of the grant of the patent: **31.12.2025**
(21) Application number: 20885754.0
(22) Date of filing: 05.11.2020
(51) Int. Cl.: B41J 2/01, C09D 11/101, C09D 11/102, C09D 11/38, B41M 5/00, B41M 7/00

(54) **THERMOSETTING INKJET INK AND PRINTING METHOD**
WÄRMEHÄRTBARE TINTENSTRAHLDRUCKTINTE UND DRUCKVERFAHREN
ENCRE POUR JET D'ENCRE THERMODURCISSABLE ET PROCÉDÉ D'IMPRESSION

(30) Priority: 08.11.2019 JP 2019202843
(43) Date of publication of application: 06.07.2022
(73) Proprietor: KONICA MINOLTA, INC., Tokyo 100-7015 (JP)
(72) Inventor: KAWANAMI, Tomoe, Tokyo 100-7015 (JP)
(74) Representative: Gille Hrabal Partnerschaftsgesellschaft mbB Patentanwälte
(86) International application number: PCT/JP2020/041325
(87) International publication number: WO 2021/090872

(56) References cited:
- EP-A1- 1 624 001
- EP-A1- 3 995 547
- WO-A1-2013/161298
- WO-A1-2015/152177
- WO-A1-2016/153035
- WO-A1-2017/163564
- WO-A1-2017/164164
- JP-A- 2013 173 907
- JP-A- 2016 069 571
- JP-A- 2018 119 094

## Description

### TECHNICAL FIELD

The present invention relates to a thermosetting inkjet ink and a printing method. More specifically, the present invention relates to a thermosetting inkjet ink capable of forming a coating layer with excellent substrate adhesion, high surface tackiness, and high surface hardness. The invention also relates to a printing method capable of forming a coating layer with excellent substrate adhesion, high surface hardness, and good surface tackiness.

### BACKGROUND ART

Conventionally, photolithographic development methods and screen printing methods have been used to form etching resist, solder resist and marking on printed circuit boards.

As a manufacturing method of printed circuit boards using an inkjet printer, it has already been proposed to form an etching resist by drawing a conductor circuit pattern on a copper clad laminate for printed circuit boards using an inkjet printer, and then perform etching treatment (for example, see Patent Literature 1). Compared to the photolithographic development method, which requires a photo mask, and the screen printing method with resist ink or marking ink, which requires a screen plate, this method significantly reduces the number of processes and labor, as well as the consumables such as developing solution, various inks and washing solvents, and also reduces waste water. From the above, a cleaner environment can be expected.

For solder resist, it has also been proposed to use the inkjet method to form a cured layer by temporary curing with light followed by main curing with heat (see, for example, Patent Literature 2 and Patent Literature 3).

However, in printed circuit boards, there was a problem that the adhesion of the layer interface between the solder resist formed with inks used in these inkjet methods and the metal substrate, for example, a copper substrate, was not sufficient.

### CITATION LIST

### PATENT LITERATURE

| | |
|---|---|
| [Patent Literature 1] | JP 5731746 B2 |
| [Patent Literature 2] | JP 4936725 B2 |
| [Patent Literature 3] | JP 5969208 B2 |

### SUMMARY OF INVENTION

### TECHNICAL PROBLEM

The present invention was made in view of the above problems and circumstances, and the problem to be solved is to provide a thermosetting inkjet ink capable of forming a coating layer with excellent substrate adhesion, high surface hardness, and good surface tackiness. Also, it is to provide a printing method capable of forming a coating layer with excellent substrate adhesion, high surface hardness, and good surface tackiness.

### SOLUTION TO PROBLEM

In order to solve the above problem, the inventor examined the cause of the above problem and other issues. As a result, it was found that by suppressing temporary curing with light to increase the reactivity of thermosetting compounds, specifically by limiting the amount of photopolymerization initiator used within a specific range and by using a gelling agent, the main effect with heat can be improved and a coating layer with good metal adhesion can be obtained. Furthermore, it was found that the deterioration of surface tackiness accompanying a reduction in the amount of photopolymerization initiator used can be prevented by using the gelling agent, thus the present invention was achieved.

That is, the above issues related to the present invention are solved by appended claims.

### ADVANTAGEOUS EFFECTS OF INVENTION

By the above means, it is possible to provide a thermosetting inkjet ink capable of forming a coating layer with excellent substrate adhesion, high surface hardness, and good surface tackiness. Also, it is also possible to provide a printing method capable of forming a coating layer with excellent substrate adhesion, high surface hardness, and good surface tackiness.

The expression mechanism of the effect or action mechanism of the present invention has not been clarified, but is presumed to be as follows.

The conventional double-cure method, in which a solder resist cured layer is formed with light and heat using an inkjet method, does not provide sufficient adhesion to metal boards.

Since substrate adhesion is considered to be obtained by thermosetting reaction, it is important to increase the reactivity of the thermosetting compound. Although adhesion can be increased by raising the thermosetting temperature higher, this is not realistic due to the large load in the process.

In the present invention, high metal adhesion can be obtained by suppressing temporary curing with light and improving thermosetting by using a gelling agent. Specifically, by decreasing the amount of used photopolymerization initiator within a specific range, not only the compound having a photo-polymerizable group consumed in photo-curing (temporary curing) but also the thermosetting compound is reduced, which is assumed to leave relatively more thermosetting compound near the metal substrate during subsequent thermosetting. Furthermore, since the gelling agent is not involved in the polymerization reaction during active light irradiation, such as ultraviolet (UV) light, and melts when heated, it functions as a dissolution aiding agent for the thermosetting agent in the thermal polymerization to accelerate the thermosetting reaction.

Meanwhile, with the decrease in photo-curing properties, the surface tackiness becomes worse, resulting in a sticky surface and problems with handling in the process (for example, double-sided printing and dust contamination). However, it was found that the gelling agent also functions to improve surface curability during photo curing and eliminates handling problems in the process.

In addition, in order to address the deterioration of surface tackiness that accompanies the reduction of photo-curing properties described above, the printing method using the thermosetting inkjet ink of the present invention includes the step of temporary curing by irradiation with active light in an atmosphere with an oxygen concentration in the range of 0.1 to 10.0% by volume without using a gelling agent. This printing method can improve surface tackiness without using a gelling agent.

This is considered to be due to the fact that no oxygen radicals are generated, and thus the residual radical monomers in the layer cured by active light accelerate the thermosetting reaction.

### DESCRIPTION OF EMBODIMENTS

The thermosetting inkjet ink according to the presnet invention includes a thermosetting compound, the thermosetting inkjet ink includes a photopolymerizable compound, a thermosetting compound, a photopolymerization initiator, and a gelling agent, the photopolymerization initiator is an acylphosphine-based initiator or an aminoacetophenone-based initiator, the thermosetting inkjet ink includes the photopolymerization initiator at a content in a range of 1 to 100 mmol/kg, and the thermosetting inkjet ink undergoes a sol-gel phase transition depending on temperature. This feature is a technical feature common to or corresponding to each of the following embodiments.

From the viewpoint of expressing the effect of the present invention, as an embodiment of the present invention, it is preferred that the thermosetting compound is a block isocyanate in which the polyisocyanate is blocked by a blocking agent.

It is also preferred that the polyisocyanate is an aliphatic polyisocyanate because it provides high substrate adhesion and also improves pencil hardness.

Furthermore, in the present invention, it is preferred that the content of the photopolymerization initiator is in the range of 1 to 70 mmol/kg.

From the viewpoint of expressing the effect of the present invention, in terms of surface tackiness and substrate adhesion, as an embodiment of the present invention, it is preferred that the photopolymerization initiator further includes a thioxanthone-based initiator in the range of 40 to 400 mmol/kg, more preferably in the range of 100 to 400 mmol/kg.

The printing method using thermosetting inkjet Ink of the present invention is characterized in that the thermosetting inkjet ink contains a photopolymerizable compound, a thermosetting compound, and a photopolymerization initiator, the photopolymerization initiator being an acylphosphine-based initiator or an aminoacetophenone-based initiator, the content of which is in the range of 1 to 100 mmol/kg, and the method includes the steps (1) to (3) described above.

From the viewpoint of expressing the effect of the present invention, in an embodiment of the printing method, it is preferred that the thermosetting compound is a block isocyanate in which the polyisocyanate is blocked by a blocking agent.

It is also preferred that the polyisocyanate is an aliphatic polyisocyanate because it provides high substrate adhesion and also improves pencil hardness.

Furthermore, in the present invention, the content of the photopolymerization initiator is preferably in the range of 1 to 70 mmol/kg.

Also, from the viewpoint of expressing the effect of the present invention, in terms of surface tackiness and substrate adhesion, it is preferred that the photopolymerization initiator further includes a thioxanthone-based initiator in the range of 40 to 400 mmol/kg, more preferably in the range of 100 to 400 mmol/kg.

Furthermore, it is preferred that the thermosetting inkjet ink contains a gelling agent in the printing method.

In the following, the present invention, its components, and the embodiments and modes of carrying out the present invention will be described in detail. In this application, "to" is used to mean the numerical values described before and after it are included as the lower and upper limits.

In the present invention, "(meth)acrylate" means acrylate or methacrylate, "(meth)acryloyl group" means acryloyl group or methacryloyl group, and "(meth)acrylic" means acrylic or methacrylic.

### <<Outline of Thermosetting Inkjet Ink of the Present Invention>>

The thermosetting inkjet ink of the present invention is characterized by containing a photopolymerizable compound, a thermosetting compound, a photopolymerization initiator, and a gelling agent, wherein the photopolymerization initiator is an acylphosphine-based initiator or an aminoacetophenone-based initiator, its content is in the range of 1 to 100 mmol/kg, and the ink undergoes a sol-gel phase transition depending on temperature.

As mentioned above, according to the present invention, temporary curing with light is suppressed, thereby improving thermosetting and substrate adhesion. In addition, by using a gelling agent that is not incorporated into the photo polymerization reaction, the thermopolymerizable compound is melted to further accelerate thermosetting. To reduce the degree of polymerization during photo curing, the amount of photopolymerization initiator is reduced. Meanwhile, with the decrease in photo-curing properties, the surface tackiness becomes worse, resulting in problems with handling in the process (for example, double-sided printing and dust contamination).

Therefore, thermosetting inkjet inks with a gelling agent are used to increase surface hardness while suppressing the degree of internal polymerization, thereby enabling both substrate adhesion and surface tackiness while maintaining a high surface hardness.

Photopolymerization initiator content of less than 1 mol/kg is not preferred because the surface is not sufficiently cured and surface hardness is insufficient. Also, the photoinitiator content of more than 100 mmol/kg is not preferred because sufficient substrate adhesion is not sufficiently strong.

When the thermosetting agent is a block isocyanate, especially an aliphatic polyisocyanate type, solubility with the gelling agent during thermosetting is increased, resulting in higher substrate adhesion. Furthermore, as polymerization reaction proceeds uniformly through the coating layer, the pencil hardness can also be improved.

Furthermore, increasing the amount of a thioxanthone-based initiator, an initiator that has an effect on surface tackiness, similarly improves substrate adhesion. This is probably due to improved light absorption at the surface during photo-polymerization while the number of photons in the depth direction is reduced, resulting in less polymerization at the interface with the substrate and a more enhanced thermosetting reaction.

### <<Details of Thermosetting Inkjet Ink of the Present Invention>>

Hereinafter, the composition of the thermosetting inkjet ink of the present invention is described in detail.

### [Thermosetting Compounds]

The thermosetting compound used in the present invention is preferably at least one of the following: thermosetting compounds containing cyclic ether groups, thermosetting compounds containing isocyanate groups, and compounds containing maleimide groups.

### (Thermosetting Compound containing Cyclic Ether Group)

A thermosetting compound containing a cyclic ether group may have a plurality of cyclic ether groups in the molecule, and is preferably a compound having an epoxy group or an oxetanyl group.

Examples of the Compounds with epoxy groups include various chain type epoxy group-containing monomers (for example, glycidyl (meth)acrylate, β-methylglycidyl (meth)acrylate, glycidyl vinyl ether, allyl glycidyl ether), various (2-oxo-1,3-oxolane) group-containing vinyl monomers (for example, (2-oxo-1,3-oxolane) methyl (meth)acrylate), various alicyclic epoxy group-containing vinyl monomers (for example, 3,4-epoxycyclohexyl (meth)acrylate, 3,4-epoxycyclohexylmethyl (meth)acrylate, 3,4-epoxycyclohexylethyl (meth)acrylate), bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, hydrogenated bisphenol A diglycidyl ether, hydrogenated bisphenol F diglycidyl ether, hydrogenated bisphenol S diglycidyl ether, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ether; polyglycidyl ethers of polyether polyols obtained by adding one or more alkylene oxides to aliphatic polyhydric alcohols such as ethylene glycol, propylene glycol and glycerol; diglycidyl esters of aliphatic long chain dibasic acids; monoglycidyl ethers of aliphatic higher alcohols; monoglycidyl ethers of phenol, cresol, butylphenol or polyether alcohol obtained by adding alkylene oxide thereto; and glycidyl esters of higher fatty acids.

Further, examples of the compound having an epoxy group include a compound having a (meth)acryloyl group and an epoxy group, and a partially (meth)acrylated product of an epoxy compound. Examples of the compound having a (meth)acryloyl group and an epoxy group include glycidyl (meth)acrylate and 4-hydroxybutyl (meth)acrylate glycidyl ether.

Examples of the compound having an oxetanyl group include polyfunctional oxetanes such as bis[(3-methyl-3-oxetanylmethoxy)methyl] ether, bis[(3-ethyl-3-oxetanylmethoxy)methyl] ether, 1,4-bis[(3-methyl-3-oxetanylmethoxy)methyl]benzene, 1,4-bis[(3-ethyl-3-oxetanylmethoxy) methyl] benzene, (3-methyl-3-oxetanyl)methyl acrylate, (3-ethyl-3-oxetanyl)methyl acrylate, (3-methyl-3-oxetanyl)methyl methacrylate, (3-ethyl-3-oxetanyl)methyl methacrylate, and oligomers or copolymers thereof, and etherified products between oxetane alcohol and a resin having a hydroxyl group such as a novolac resin, poly(p-hydroxystyrene), cardo bisphenol, calixarene, calixresorcinarene, or silsesquioxane. Another example is a copolymer of an unsaturated monomer having an oxetane ring and alkyl (meth)acrylate.

### (Thermosetting Compound having Isocyanate Group)

The thermosetting compound having an isocyanate group is not particularly limited as long as it is a compound having two or more isocyanate groups in the molecule, and specific examples thereof include: aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylene diisocyanate, xylylene diisocyanate (XDI), tetramethylxylylene diisocyanate (TMXDI), tridine diisocyanate (TODI), 1,5-naphthalene diisocyanate (NDI); aliphatic polyisocyanates such as hexamethylene diisocyanate (HDI), trimethylhexamethylene diisocyanate (TMHDI), lysine diisocyanate, and norbornane diisocyanate methyl (NBDI); alicyclic polyisocyanates such as transcyclohexane-1,4-diisocyanate, isophorone diisocyanate (IPDI), H6XDI (hydrogenated XDI), H12MDI (hydrogenated MDI), and H6TDI (hydrogenated TDI); polyisocyanates such as polymethylene polyphenylene polyisocyanates; burette, isocyanurate, and carbodiimide modified products thereof; and so on.

Among these, a block isocyanate, which is a polyfunctional isocyanate compound having an isocyanate group protected by a thermally dissociable blocking agent is preferred in particular in terms of substrate adhesion and surface hardness of the coating layer.

That is, the polyisocyanate is preferably a block isocyanate blocked by a blocking agent. The thermosetting reaction proceeds upon thermal dissociation of the isocyanate groups protected by the blocking agent. In the case of the double cure method, it is difficult to accelerate the thermosetting reaction after UV polymerization. However, in the present invention, since the gelling agent is not involved in polymerization reaction of monomer during UV irradiation and melts when heated, it functions as a dissolution aiding agent for the thermosetting agent in the thermal polymerization to accelerate the thermosetting reaction.

The effect is remarkable due to the high miscibility of the isocyanate and the gelling agent. In particular, the aliphatic polyisocyanate results in higher solubility, thereby increasing the substrate adhesion. Since the thermosetting agent becomes uniform in the coating layer during the thermal polymerization, the surface hardness can also be improved.

The thermally dissociable blocking agent is preferably at least one compound selected from the group consisting of an oxime-based compound, a pyrazole-based compound, and an active ethylene-based compound in terms of ink storage stability and thermal dissociability.

Examples of the oxime-based compound include formamide oxime, acetoaldoxime, acetoxime, methylethylketone oxime, and cyclohexanone oxime.

Examples of the pyrazole-based compound include pyrazole, 3-methylpyrazole, and 3,5-dimethylpyrazole.

Examples of the active ethylene-based compound include dimethyl malonate, diethyl malonate, methyl acetoacetate, ethyl acetoacetate, and acetylacetone.

Examples of the polyfunctional isocyanate compound having an isocyanate group protected by a blocking agent include 2-[(3,5-dimethylpyrazolyl)carbonylamino]ethyl methacrylate, 2-[(3-butylidene)aminooxycarbonylamino]ethyl methacrylate, 2-[(3,5-dimethylpyrazolyl)carbonylamino]ethyl acrylate, and 2-[(3-butylidene)aminooxycarbonylamino]ethyl acrylate.

### (Compound having Maleimide Group)

Examples of the compound having a maleimide group include N-methylmaleimide, N-ethylmaleimide, N-hexylmaleimide, N-propylmaleimide, N-butylmaleimide, N-octylmaleimide, N-dodecylmaleimide, N-cyclohexylmaleimide, N-phenylmaleimide, N-p-carboxyphenylmaleimide, N-p-hydroxyphenylmaleimide, N-p-chlorophenylmaleimide, N-p-tolylmaleimide, N-p-xylylmaleimide, N-o-chlorophenylmaleimide, N-o-tolylmaleimide, N-benzylmaleimide, N-2,5-diethylphenylmaleimide, N-2,5-dimethylphenylmaleimide, N-m-tolylmaleimide, N-α-naphthylmaleimide, N-o-xylylmaleimide, N-m-xylylmaleimide, bismaleimidomethane, 1,2-bismaleimidoethane, 1,6-bismaleimidohexane, bismaleimidododecane, N,N'-m-phenylenedimaleimide, N,N'-p-phenylenedimaleimide, 4,4'-bismaleimidodiphenyl ether, 4,4'-bismaleimidodiphenylmethane, 4,4'-bismaleimido-di(3-methylphenyl)methane, 4,4'-bismaleimido-di(3-ethylphenyl)methane, 4,4'-bismaleimido-di(3-methyl-5-ethylphenyl)methane, N,N'-(2,2-bis-(4-phenoxyphenyl)propane)dimaleimide, N,N'-2,4-tolylenediimide, N,N'-2,6-tolylenedimaleimide, N,N'-m-xylylenedimaleimide, and bisphenol A diphenyl ether bismaleimide. Among these, bismaleimide is preferred.

### [Photopolymerizable Compound]

Examples of the photopolymerizable compound include radically polymerizable compounds and cationically polymerizable compounds.

The photopolymerizable compound may be any compound having an action of causing polymerization or crosslinking reaction by irradiation with active ray to be polymerized or crosslinked and curing the ink. Examples of the photopolymerizable compound include radically polymerizable compounds and cationically polymerizable compounds. The photopolymerizable compound may be any of a monomer, a polymerizable oligomer, a prepolymer or a mixture thereof. The ink-jet ink may contain only one photopolymerizable compound, or may contain two or more photopolymerizable compounds.

The content of the photopolymerizable compound can be, for example, 1% by mass or more and 97% by mass or less of the total mass of the inkjet ink.

The radically polymerizable compound is preferably an unsaturated carboxylic acid ester compound, more preferably a (meth)acrylate. In the present invention, "(meth)acrylate" means acrylate or methacrylate, "(meth)acryloyl group" means acryloyl group or methacryloyl group, and "(meth)acrylic" means acrylic or methacrylic.

Examples of the (meth)acrylate include: monofunctional acrylates, including isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth)acryloyloxyethyl hexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethylsuccinic acid, 2-(meth)acryloyloxyethylphthalic acid, 2-(meth)acryloyloxyethyl-2-hydroxyethyl-phthalic acid, and t-butylcyclohexyl (meth)acrylate; difunctional acrylates, including triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol tricyclodecane di(meth)acrylate, bisphenol A PO adduct di(meth)acrylate, neopentyl glycol di(meth)acrylate hydroxypivalate, polytetramethylene glycol di(meth)acrylate, polyethylene glycol diacrylate, tripropylene glycol diacrylate, and tricyclodecanedimethanol diacrylate; and polyfunctional acrylates, including tri- or higher-functional acrylates such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerol propoxytri(meth)acrylate, and pentaerythritol ethoxytetra(meth)acrylate.

From the viewpoint of photosensitivity and the like, the (meth)acrylate is preferably stearyl (meth)acrylate, lauryl (meth)acrylate, isostearyl (meth)acrylate, ethoxydiethylene glycol (meth)acrylate, isobornyl (meth)acrylate, tetraethylene glycol di(meth)acrylate, glycerol propoxytri(meth)acrylate, and the like.

The (meth)acrylate may be modified. Examples of modified (meth)acrylate include ethylene oxide modified (meth)acrylate such as ethylene oxide-modified trimethylolpropane tri(meth)acrylate and ethylene oxide modified pentaerythritol tetraacrylate, caprolactone modified (meth)acrylates such as caprolactone modified trimethylolpropane tri(meth)acrylate, caprolactam modified (meth)acrylates such as caprolactam-modified dipentaerythritol hexa(meth)acrylate, and the like.

The (meth)acrylate may be a polymerizable oligomer. Examples of the (meth)acrylate that is a polymerizable oligomer include epoxy (meth)acrylate oligomers, aliphatic urethane (meth)acrylate oligomers, aromatic urethane (meth)acrylate oligomers, polyester (meth)acrylate oligomers, and linear (meth)acrylic oligomers, and the like.

The cationic polymerizable compound may be an epoxy compound, a vinyl ether compound, an oxetane compound, or the like. The ink-jet ink may contain only one cationically polymerizable compound, or may contain two or more cationically polymerizable compounds.

### [Gelling Agent]

Preferably, the gelling agent according to the present invention is present in the cured layer after curing by active light without being incorporated into the polymerization, and is in a melting state in the coating layer during thermal polymerization to make the thermosetting agent evenly distributed.

Such a gelling agent is preferably at least one compound among compounds represented by the following general formula (G1) or (G2) in that the gelling agent is dispersed in the cured film without inhibiting the curability of the ink. Further, it is also preferable in that pinning property is good, drawing in which thin lines and film thicknesses are both achieved can be performed, and thin line reproducibility is excellent in the ink-jet printing.

General formula (G1): R₁-CO-R₂

General formula (G2): R₃-COO-R₄

wherein R₁ to R₄ each independently represent an alkyl chain having a linear portion having 12 or more carbon atoms and optionally having a branch.

The ketone wax represented by the general formula (G1) or the ester wax represented by the general formula (G2) has a linear or branched hydrocarbon group (alkyl chain) having 12 or more carbon atoms, so that the crystallinity of the gelling agent is further improved and the water resistance is improved, and a sufficient space is produced in the following card house structure. Therefore, the ink medium such as the solvent and the photopolymerizable compound is sufficiently encapsulated in the space, and the pinning property of the ink is further improved.

Further, it is preferable that the number of carbon atoms of the linear or branched hydrocarbon group (alkyl chain) is 26 or less, and when the number of carbon atoms is 26 or less, the melting point of the gelling agent does not rise excessively, so that it is not necessary to heat the ink excessively when the ink is ejected.

From the above viewpoint, it is particularly preferable that R₁ and R₂ or R₃ and R₄ are linear hydrocarbon groups having 12 or more and 23 or less carbon atoms.

Further, from the viewpoint of increasing the gelation temperature of the ink and rapidly gelling the ink after landing, it is preferable that any of R₁ or R₂ or any of R₃ or R₄ is a saturated hydrocarbon group having 12 or more and 23 or less carbon atoms.

From the above viewpoint, it is more preferable that both R₁ and R₂ or both R₃ and R₄ are saturated hydrocarbon groups having 11 or more and less than 23 carbon atoms.

Examples of the ketone wax represented by the general formula (G1) include dilignoceryl ketone (C24-C24), dibehenyl ketone (C22-C22), distearyl ketone (C18-C18), dieicosyl ketone (C20-C20), dipalmityl ketone (C16-C16), dimyristyl ketone (C14-C14), dilauryl ketone (C12-C12), lauryl myristyl ketone (C12-C14), lauryl palmityl ketone (C12-C16), myristyl palmityl ketone (C14-C16), myristyl stearyl ketone (C14-C18), myristyl behenyl ketone (C14-C22), palmityl stearyl ketone (C16-C18), palmityl behenyl ketone (C16-22), and stearyl behenyl ketone (C18-C22). The carbon number in parentheses represents the carbon number of each of the two hydrocarbon groups separated by the carbonyl group.

Examples of commercially available products of the ketone wax represented by the general formula (G1) include Stearonne (manufactured by Alfa Aeser; stearon), 18-Pentatriacontanon (manufactured by Alfa Aeser), Hentriacontan-16-on (manufactured by Alfa Aeser), and Kao wax T-1 (manufactured by Kao Corporation).

Examples of the fatty acid or ester wax represented by the general formula (G2) include behenyl behenate (C21-C22), icosyl icosanoate (C19-C20), stearyl stearate (C17-C18), palmityl stearate (C17-C16), lauryl stearate (C17-C12), cetyl palmitate (C15-C16), stearyl palmitate (C15-C18), myristyl myristate (C13-C14), cetyl myristate (C13-C16), octyldodecyl myristate (C13-C20), stearyl oleate (C17-C18), stearyl erucate (C21-C18), stearyl linoleate (C17-C18), behenyl oleate (C18-C22), and arachidyl linoleate (C17-C20). The carbon number in parentheses represents the carbon number of each of the two hydrocarbon groups separated by the ester group.

Examples of commercially available products of the ester wax represented by the general formula (G2) include UNISTAR-M-2222SL and SPERMACETI (manufactured by NOF Corporation; "UNISTAR" is a registered trademark of this company), EXCEPARL SS and EXCEPARL MY-M (manufactured by Kao Corporation; "EXCEPARL" is a registered trademark of this company), EMALEX CC-18 and EMALEX CC-10 (manufactured by Nihon Emulsion Co., Ltd.; "EMALEX" is a registered trademark of this company), and AMREPS PC (manufactured by KOKYU ALCOHOL KOGYO CO., LTD.; "AMREPS" is a registered trademark of this company).

Since these commercially available products are often a mixture of two or more types, they may be separated and purified and contained in the ink as necessary. Among these gelling agents, ketone wax, ester wax, higher fatty acid, higher alcohol, and fatty acid amide are preferable from the viewpoint of solubility.

The content of the gelling agent according to the present invention is preferably in the range of 0.5 to 5.0% by mass based on the total mass of the ink. When the content of the gelling agent is within the above range, the solubility of the gelling agent on the solvent component becomes good. Further, from the above viewpoint, the content of the gelling agent in the ink-jet ink is more preferably in the range of 0.5 to 2.5% by mass.

Further, the gelling agent is preferably crystallized at a temperature equal to or lower than a gelation temperature of the ink. The gelation temperature refers to a temperature at which the gelling agent undergoes a phase transition from sol to gel when an ink solating or liquefying from heating is cooled, causing the viscosity of the ink to abruptly change. Specifically, the solating or liquefying ink is continued to be cooled, while measuring the viscosity thereof using a viscoelasticity meter (for example, MCR300, manufactured by Physica Messtechnik GmbH), and a temperature at which the viscosity is increased abruptly can be set as the gelation temperature of the ink.

### [Photopolymerization Initiator]

The photopolymerization initiator of the present invention is preferably an acylphosphine-based initiator or an aminoacetophenone-based initiator. The acylphosphine-based initiator is preferably acylphosphine oxide. Acylphosphine oxide is a photopolymerization initiator with absorption at long wavelengths and is effective in enhancing internal sensitivity. Specific examples include monoacylphosphine oxide and bisacylphosphine oxide. The aminoacetophenone-based initiator is a photopolymerization initiator that has a structure with a strong electrondonating substituent such as an alkylthio group or dialkylamino group in the para-position of the benzoyl group. Because of this substituent, the absorption bottom extends to longer wavelengths. This is advantageous in enhancing the internal sensitivity. Specific examples include 2-methyl-1-[4-(methylthio)phenyl]-2-morpholinopropan-1-one, 2-benzyl-2-dimethylamino-I-(4-morpholinophenyl)-butanone-1.

To accelerate the thermosetting reaction by suppressing light-induced temporary curing, the initiator is preferably added in a small amount. However, since the surface tackiness becomes worse by suppressing light-induced temporary curing, the amount of initiator to be added is preferably in the range of 1 to 100 mmol/kg. When the amount is in the range of 1 to 70 mmol/kg, the substrate adhesion can be further improved.

In the present invention, preferably, a thioxanthone-based initiator is further added. When the amount of the thioxanthone-based initiator, which is an effective initiator for improving surface curing, is increased, substrate adhesion is particularly improved. While light absorption at the surface improves, the number of photons in the depth direction decreases. As a result, the polymerization degree at the substrate interface is reduced, and the thermosetting reaction is more accelerated.

Examples of the thioxanthone-based initiator include 2-isopropylthioxanthone, 2-4-dimethylthioxanthone, 2,4-diethylthioxanthone, and 2,4-dichlorothioxanthone. The amount to be added is preferably in the range of 40 to 400 mmol/kg from the above viewpoint, more preferably in the range of 100 to 400 mmol/kg.

### [Colorant]

The ink of the present invention may further contain a colorant, as necessary.

The colorant may be a dye or a pigment, but the pigment is preferred because it has good dispersibility with respect to components of the ink and is excellent in weather resistance. The pigment is not particularly limited, and examples thereof include organic pigments or inorganic pigments having the following numbers described in Color Index.

Examples of red or magenta pigments include pigments selected from Pigment Reds 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257; Pigment Violets 3, 19, 23, 29, 30, 37, 50, and 88; and Pigment Oranges 13, 16, 20, and 36, or mixtures thereof.

Examples of blue or cyan pigments include pigments selected from Pigment Blues 1, 15, 15:1, 15:2, 15:3, 15:4, 15:6, 16, 17-1, 22, 27, 28, 29, 36, and 60, or mixtures thereof.

Examples of green pigments include pigments selected from Pigment Greens 7, 26, 36, and 50, or mixtures thereof.

Examples of yellow pigments include pigments selected from Pigment Yellows 1, 3, 12, 13, 14, 17, 34, 35, 37, 55, 74, 81, 83, 93, 94,95, 97, 108, 109, 110, 137, 138, 139, 153, 154, 155, 157, 166, 167, 168, 180, 185, and 193, or mixtures thereof.

Examples of black pigments include pigments selected from Pigment Blacks 7, 28, and 26, or mixtures thereof.

Specific examples of commercially available products of the pigment include Black Pigment (manufactured by Mikuni-Color Ltd.) CHROMOFINE YELLOWs 2080, 5900, 5930, AF-1300, and AF-2700L; CHROMOFINE ORANGEs 3700L and 6730; CHROMOFINE SCARLET 6750; CHROMOFINE MAGENTAs 6880, 6886, 6891N, 6790, and 6887; CHROMOFINE VIOLET RE; CHROMOFINE REDs 6820 and 6830; CHROMOFINE BLUEs HS-3, 5187, 5108, 5197, 5085N, SR-5020, 5026, 5050, 4920, 4927, 4937, 4824, 4933GN-EP, 4940, 4973, 5205, 5208, 5214, 5221, and 5000P; CHROMOFINE GREENs 2GN, 2GO, 2G-550D, 5310, 5370, and 6830; CHROMOFINE BLACK A-1103; SEIKAFAST YELLOWs 10GH, A-3, 2035, 2054, 2200, 2270, 2300, 2400(B), 2500, 2600, ZAY-260, 2700(B), and 2770; SEIKAFAST REDs 8040, C405(F), CA120, LR-116, 1531B, 8060R, 1547, ZAW-262, 1537B, GY, 4R-4016, 3820, 3891, and ZA-215; SEIKAFAST CARMINEs 6B1476T-7, 1483LT, 3840, and 3870; SEIKAFAST BORDEAUX 10B-430; SEIKALIGHT ROSE R40; SEIKALIGHT VIOLETs B800 and 7805; SEIKAFAST MAROON 460N; SEIKAFAST ORANGEs 900 and 2900; SEIKALIGHT BLUEs C718 and A612; CYANINE BLUEs 4933M, 4933GN-EP, 4940, and 4973 (manufactured by Dainichiseika Color & Chemicals Mfg.Co.,Ltd.); KET Yellows 401, 402, 403, 404, 405, 406, 416, and 424; KET Orange 501; KET Reds 301, 302, 303, 304, 305, 306, 307, 308, 309, 310, 336, 337, 338, and 346; KET Blues 101, 102, 103, 104, 105, 106, 111, 118, and 124; KET Green 201 (manufactured by DIC Corporation), Colortex Yellows 301, 314, 315, 316, P-624, 314, U10GN, U3GN, UNN, UA-414, and U263: Finecol Yellows T-13 and T-05; Pigment Yellow 1705; Colortex Orange 202, Colortex Reds 101, 103, 115, 116, D3B, P-625, 102, H-1024, 105C, UFN, UCN, UBN, U3BN, URN, UGN, UG276, U456, U457, 105C, and USN; Colortex Maroon 601; Colortex Brown B610N; Colortex Violet 600; Pigment Red 122; Colortex Blues 516, 517, 518, 519, A818, P-908, and 510; Colortex Greens 402 and 403; Colortex Blacks 702 and U905 (manufactured by Sanyo Color Works. LTD.); Lionol Yellow 1405G; Lionol Blues FG7330, FG7350, FG7400G, FG7405G, ES, and ESP-S (manufactured by Toyo Ink SC Holdings Co., Ltd.) ; Toner Magenta E02; Permanent Rubin F6B; Toner Yellow HG; Permanent Yellow GG-02; Hostaperm Blue B2G (manufactured by Hoechst Industry Ltd.); Novoperm P-HG; Hostaperm Pink E; Hostaperm Blue B2G (manufactured by Clariant International Ltd.); and Carbon Blacks #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (manufactured by Mitsubishi Chemical Corporation).

The pigments may be dispersed, for example, with a ball mill, a sand mill, an attritor, a roll mill, an agitator, a Henschel mixer, a colloid mill, an ultrasonic homogenizer, a pearl mill, a wet jet mill, or a paint shaker.

The pigment is preferably dispersed so that the volume average particle size of the pigment particles is preferably in the range of 0.08 to 0.5 µm and a maximum diameter of 0.3 to 10 µm, more preferably 0.3 to 3 µm.

The dispersion of the pigment is adjusted by the selection of the pigment, the dispersant, and the dispersion medium, the dispersion conditions, the filtration conditions, and the like.

The ink of the present invention may further contain a dispersant in order to enhance the dispersibility of the pigment.

Examples of the dispersant include carboxylic acid esters having a hydroxy group, salts of long chain polyamino amide and high molecular weight acid ester, salts of high molecular weight polycarboxylic acid, salts of long chain polyamino amide and polar acid ester, high molecular weight unsaturated acid esters, polymer copolymers, modified polyurethanes, modified polyacrylates, polyether ester type anion activators, naphthalene sulfonic acid formalin condensate salts, aromatic sulfonic acid formalin condensate salts, polyoxyethylene alkyl phosphate esters, polyoxyethylene nonyl phenyl ethers, and stearyl amine acetates. Examples of commercially available products of the dispersant include Avecia's Solsperse series and Ajinomoto Fine-Techno Co., Inc.'s PB series.

The ink of the present invention may further contain a dispersion aid, as necessary. The dispersion aid may be selected according to the pigment.

The total amount of the dispersant and the dispersion aid is preferably in the range of 1 to 50% by mass based on the pigment.

The ink of the present invention may further contain a dispersion medium for dispersing the pigment, as necessary. Although the ink may contain a solvent as the dispersion medium, it is preferable to use a photopolymerizable compound as described above (especially a monomer having a low viscosity) as the dispersion medium in order to suppress the residual solvent in the formed image.

Examples of the dye include oil-soluble dyes.

Examples of the oil-soluble dye include the following various dyes. Examples of magenta dyes include MS Magenta VP, MS Magenta HM-1450, MS Magenta HSo-147 (all manufactured by Mitsui Chemicals, Inc.), AIZENSOT Red-1, AIZEN SOT Red-2, AIZEN SOT Red-3, AIZEN SOT Pink-1, and SPIRON Red GEH SPECIAL (all manufactured by Hodogaya Chemical Co., Ltd.); RESOLIN Red FB 200%, MACROLEX Red Violet R, and MACROLEX ROT5B (all manufactured by Bayer); KAYASET Red B, KAYASET Red 130, and KAYASET Red 802 (all manufactured by Nippon Kayaku Co., Ltd.); PHLOXIN, ROSE BENGAL, and ACID Red (all manufactured by Daiwa Dyestuff Mfg. Co., Ltd.); HSR-31 and DIARESIN Red K (all manufactured by Mitsubishi Chemical Corporation); and Oil Red (manufactured by BASF Japan Ltd.).

Examples of cyan dyes include MS Cyan HM-1238, MS Cyan HSo-16, Cyan HSo-144, and MS Cyan VPG (all manufactured by Mitsui Chemicals, Inc.); AIZEN SOT Blue-4 (manufactured by Hodogaya Chemical Co., Ltd.); RESOLIN BR.Blue BGLN 200%, MACROLEX Blue RR, CERES Blue GN, SIRIUS SUPRA TURQ.Blue Z-BGL, and SIRIUS SUPRA TURQ.Blue FB-LL 330% (all manufactured by Bayer); KAYASET Blue FR, KAYASET Blue N, KAYASET Blue 814, Turq.Blue GL-5 200, and Light Blue BGL-5 200 (all manufactured by Nippon Kayaku Co., Ltd.); DAIWA Blue 7000 and Oleosol Fast Blue GL (all manufactured by Daiwa Dyestuff Mfg. Co., Ltd.); DIARESIN Blue P (manufactured by Mitsubishi Chemical Corporation); and SUDAN Blue 670, NEOPEN Blue 808, and ZAPON Blue 806 (all manufactured by BASF Japan Ltd.).

Examples of yellow dyes include MS Yellow HSm-41, Yellow KX-7, and Yellow EX-27 (manufactured by Mitsui Chemicals, Inc.); AIZEN SOT Yellow-1, AIZEN SOT YelloW-3, and AIZEN SOT Yellow-6 (all manufactured by Hodogaya Chemical Co., Ltd.); MACROLEX Yellow 6G and MACROLEX FLUOR.Yellow 10GN (all manufactured by Bayer); KAYASET Yellow SF-G, KAYASET Yellow 2G, KAYASET Yellow A-G, and KAYASET Yellow E-G (all manufactured by Nippon Kayaku Co., Ltd.); DAIWA Yellow 330HB (manufactured by Daiwa Dyestuff Mfg. Co., Ltd.); HSY-68 (manufactured by Mitsubishi Chemical Corporation); and SUDAN Yellow 146 and NEOPEN Yellow 075 (all manufactured by BASF Japan Ltd.).

Examples of black dyes include MS Black VPC (Mitsui Chemicals, Inc.); AIZEN SOT Black-1 and AIZEN SOT Black-5 (all manufactured by Hodogaya Chemical Co., Ltd.); RESORIN Black GSN 200% and RESOLIN BlackBS (all manufactured by Bayer); KAYASET Black A-N (manufactured by Nippon Kayaku Co., Ltd.); DAIWA Black MSC (manufactured by Daiwa Dyestuff Mfg. Co., Ltd.); HSB-202 (manufactured by Mitsubishi Chemical Corporation); and NEPTUNE Black X60 and NEOPEN Black X58 (manufactured by BASF Japan Ltd.).

The ink of the present invention may contain one or more colorants and may be toned to a desired color.

The content of the colorant is preferably in the range of 0.1 to 20% by mass, and more preferably in the range of 0.4 to 10% by mass based on the total amount of the ink.

### [Other Components]

The ink of the present invention may further contain other components including a polymerization inhibitor and a surfactant as long as the effects of the present invention can be obtained. The ink of the present invention may contain only one of these components, or may contain two or more thereof.

### (Polymerization Inhibitor)

Specific examples of the polymerization inhibitors include (alkyl)phenol, hydroquinone, catechol, resorcin, p-methoxyphenol, t-butylcatechol, t-butylhydroquinone, pyrogallol, 1,1-picrylhydrazyl, phenothiazine, p-benzoquinone, nitrosobenzene, 2,5-di-tert-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oxime cresol, guaiacol, o-isopropylphenol, butyraldoxime, methyl ethyl ketoxime, and cyclohexanone oxime.

Examples of commercially available products of the polymerization inhibitor include Irgastab UV10 (manufactured by BASF Japan Ltd.) and Genorad 18 (manufactured by Rahn A.G.).

The amount of the polymerization inhibitor can be arbitrarily set as long as the effects of the present invention can be obtained.

The amount of the polymerization inhibitor may be, for example, 0.001% by mass or more and less than 1.0% by mass based on the total mass of the ink.

### (Surfactant)

Examples of the surfactant include anionic surfactants such as dialkyl sulfosuccinates, alkylnaphthalene sulfonates, and fatty acid salts, nonionic surfactants such as polyoxyethylene alkyl ethers, polyoxyethylene alkyl allyl ethers, acetylene glycols, and polyoxyethylene/polyoxypropylene block copolymers, cationic surfactants such as alkylamine salts and quaternary ammonium salts, and silicone or fluorine surfactants.

Examples of the silicone-based surfactant include polyether-modified polysiloxane compounds, specifically Tego rad 2250, manufactured by Evonik, KF-351A, KF-352A, KF-642, and X-22-4272, manufactured by Shin-Etsu Chemical Co., Ltd., BYK 307, BYK 345, BYK 347, and BYK 348, manufactured by BYK-Chemie ("BYK" is a registered trademark of this company), and TSF 4452, manufactured by Momentary Performance Materials.

The fluorine-based surfactants are those where some or all of hydrogen atoms bonding to the carbon of hydrophobic groups of ordinary surfactants are replaced with fluorine atoms.

Examples of the fluorine-based surfactant include Megafac F manufactured by DIC Corporation ("Megafac" is a registered trademark of this company); Surflon manufactured by Asahi Glass Co., Ltd. ("Surflon" is a registered trademark of this company); Fluorad FC manufactured by 3M Company ("Fluorad" is a registered trademark of this company); Monflor manufactured by Imperial Chemical Industries; Zonyls manufactured by E. I. du Pont de Nemours and Company; Licowet VPF manufactured by Hoechst AG; and FTERGENT manufactured by NEOS COMPANY LIMITED ("FTERGENT" is a registered trademark of this company).

The amount of the surfactant can be arbitrarily set as long as the effects of the present invention can be obtained. The amount of the surfactant may be, for example, 0.001% by mass or more and less than 1.0% by mass based on the total mass of the ink.

### (Curing Accelerator)

In the present invention, a curing accelerator may be contained as necessary. The curing accelerator can be used without particular limitation as long as it promotes the thermal curing of the resin component.

Examples of the curing accelerator include imidazoles, dicyandiamide derivatives, dicarboxylic acid dihydrazide, triphenylphosphine, tetraphenylphosphonium tetraphenylborate, 2-ethyl-4-methylimidazoletetraphenylborate, and 1,8-diazabicyclo[5.4.0]undecene-7-tetraphenylborate.

### (Coupling Agent)

In the present invention, various coupling agents may be contained as necessary. By containing the coupling agent, the substrate adhesion can be improved.

Examples of the various coupling agents include silane-based, titanium-based, and aluminum-based coupling agents.

### (Ion Scavenger)

In the present invention, an ion scavenger may be contained as necessary. The inclusion of an ion scavenger has advantages such as adsorption of ionic impurities and improved insulation properties under conditions where the cured film absorbs moisture.

Examples of the ion scavenger include inorganic ion adsorbents such as triazine thiol compounds, bisphenol-based reducing agents, zirconium compounds, and antimony bismuth-based magnesium aluminum compounds.

### (Solvent)

In the ink of the present invention, a solvent-free ink is inherently preferable from the viewpoint of curability, but it can also be added to adjust the ink viscosity.

### [Physical Properties]

The viscosity at 25°C of the ink of the present invention is preferably in the range of 1 to 1 × 10⁴ Pa·s from the viewpoint that the ink is sufficiently gelled and the pinning property becomes good when the ink is landed and the temperature is decreased to normal temperature.

Further, from the viewpoint of further enhancing the discharging property from the ink-jet head, the viscosity of the ink of the present invention at 80°C is preferably in the range of 3 to 20 mPa·s, and more preferably in the range of 7 to 9 mPa·s.

The ink of the present invention preferably has a phase transition point in the range of 40°C or more and less than 100°C. When the phase transition point is 40°C or more, the ink rapidly gels after landing on the recording medium, so that the pinning property is further improved. Further, when the phase transition point is less than 100°C, the ink handling property becomes good and the ejection stability is improved.

From the viewpoint of enabling ink to be discharged at a lower temperature and reducing the load on the image forming apparatus, the phase transition point of the ink of the present invention is more preferably in the range of 40 to 60°C.

The viscosity at 80°C, the viscosity at 25°C and the phase transition point of the ink of the present invention can be determined by measuring the temperature change of the dynamic viscoelasticity of the ink with a rheometer.

In the present invention, these viscosities and phase transition point are values obtained by the following methods.

The ink of the present invention is heated to 100°C, and while measuring its viscosity with a stresscontrolled rheometer, Physica MCR301 (diameter of cone plate: 75 mm, cone angle: 1.0°), manufactured by Anton Paar GmbH, the ink is cooled to 20°C under conditions of a shear rate of 11.7 (1/s) and a cooling rate of 0.1°C/s, and thus, a viscosity-temperature curve is obtained.

The viscosity at 80°C and the viscosity at 25°C can be obtained reading viscosities at 80°C and 25°C on the viscosity-temperature curve. The phase transition point can be obtained as a temperature at which the viscosity is 200 mPa·s on the viscosity-temperature curve.

From the viewpoint of further enhancing the discharging property from the ink-jet head, the average dispersed particle size of the pigment particles according to the present invention is preferably in the range of 50 to 150 nm, and the maximum particle size is preferably in the range of 300 to 1000 nm. A still more preferable average dispersed particle size is in the range of 80 to 130 nm.

An average dispersed particle size of a pigment particle in the present invention means a value obtained by a dynamic light scattering method using Zetasizer Nano ZSP, manufactured by Malvern Instruments. Incidentally, since an ink containing a colorant has such a high concentration that light is not transmitted therethrough in using this measuring apparatus, the ink is diluted 200 times before the measurement. The measurement temperature is set to normal temperature (25°C).

### [Printing Method]

The printing method using thermosetting inkjet Ink of the present invention is characterized in that the thermosetting inkjet ink contains a photopolymerizable compound, a thermosetting compound, and a photopolymerization initiator, the photopolymerization initiator being an acylphosphine-based initiator or an aminoacetophenone-based initiator, the content of which is in the range of 1 to 100 mmol/kg, and the method includes the steps (1) to (3) described below.

(1) a step of discharging a thermosetting inkjet ink from a nozzle and landing it on a recording medium
(2) a step of temporarily curing by irradiating the landed thermosetting inkjet ink with an active ray in an atmosphere with an oxygen concentration in the range of 0.1 to 10.0% by volume
(3) a step of main curing by heating the temporarily cured thermosetting inkjet ink

As mentioned above, according to the present invention, temporary curing with light is suppressed, thereby improving thermosetting and substrate adhesion. To reduce the degree of polymerization during photo curing, the amount of photopolymerization initiator is reduced. Meanwhile, with the decrease in curing properties, the surface tackiness becomes worse, resulting in problems with handling in the process (for example, double-sided printing and dust contamination).

The thermosetting inkjet ink of the aforementioned invention solved it by inclusion of a gelling agent. However, it is possible to realize both substrate adhesion and surface tackiness while maintaining a high surface hardness even without a gelling agent, by a printing method of temporary curing by active light irradiation in an atmosphere with an oxygen concentration in the range of 0.1 to 10.0% by volume to increase surface curability while suppressing the degree of internal polymerization.

The thermosetting inkjet ink described in the following printing method is the same in composition as the thermosetting inkjet ink of the invention described above, except that it does not need to contain a gelling agent. The thermosetting inkjet ink used in the printing method is also referred to as the "ink of the present invention."

The ink of the present invention is preferably an ink for forming a solder resist pattern used for a printed circuit board

### <Step (1)>

Step (1) is a step of discharging a thermosetting inkjet ink from a nozzle and landing it on a recording medium. In the step (1), droplets of the ink of the present invention are discharged from an inkjet head and landed on a recording medium, for example, a printed circuit board, at a position corresponding to a resist film to be formed, and patterning is performed.

The discharge method from the ink-jet head may be either an on-demand system or a continuous system.

The ink-jet head of the on-demand system may be any of electromechanical transduction systems of a single cavity type, a double cavity type, a bender type, a piston type, a share mode type, a shared-wall type, and the like, and thermoelectric transduction systems of a thermal ink-jet type, a Bubble Jet (Bubble Jet is a registered trademark of Canon Inc.) type, and the like.

Discharging stability of the ink droplet can be increased by discharging the droplet in a heated state from the ink-jet head. The temperature of the ink in discharging is preferably in the range of 40 to 100°C, and for further enhancing the discharging stability, is more preferably in the range of 40 to 90°C. In particular, it is preferable to perform the injection at an ink temperature such that the viscosity of the ink is in the range of 7 to 15 mPa·s, more preferably in the range of 8 to 13 mPa·s.

When a sol-gel phase transition type ink including the gelling agent is used, in order to enhance a discharging property of the ink from an ink-jet head, when the ink is filled in the ink-jet head, the temperature of the ink is preferably set to (gelation temperature of the ink+10)°C to (gelling temperature of the ink+30)°C. When the temperature of the ink in the ink-jet head is lower than (gelation temperature+10)°C, the ink becomes gel in the inkjet head or on a nozzle surface, and the discharging property of the ink tends to decrease. Meanwhile, when the temperature of the ink in the ink-jet head exceeds (gelation temperature+30)°C, the temperature of the ink becomes too high, and an ink component may be deteriorated.

The method of heating the ink is not particularly limited. For example, at least one of an ink supply system such as an ink tank constituting a head carriage, a supply pipe, or a front chamber ink tank just in front of a head, piping with a filter, and a piezo head can be heated with a panel heater, a ribbon heater, or a heat-retaining water.

The amount of ink droplets discharged is preferably in the range of 2 to 20 pL from viewpoints of recording speed and image quality.

The printed circuit board is not particularly limited, but is preferably a copper-clad laminate of all grades (FR-4 and the like) employing materials such as copper-clad laminates for high frequency circuit in which paper phenol, paper epoxy, glass fabric epoxy, glass polyimide, glass fabric/nonwoven fabric epoxy, glass fabric/paper epoxy, synthetic fiber epoxy, and fluorine/polyethylene/PPO/cyanate esters are used, a polyimide film, a PET film, a glass substrate, a ceramic substrate, a wafer plate, a stainless steel plate, or the like.

### <Step (2)>

In Step (2), the landed thermosetting inkjet ink is irradiated with an active ray to temporarily cure the ink in an atmosphere with an oxygen concentration in the range of 0.1 to 10.0% by volume. In the step (2), the ink landed in the step (1) is irradiated with an active ray to temporarily cure the ink.

The active ray can be selected from, for example, electron beam, ultraviolet rays, α-rays, γ-rays, X-rays and the like, and is preferably ultraviolet rays.

The irradiation of ultraviolet rays can be performed under the condition of a wavelength of 395 nm using a water-cooled LED manufactured by Phoseon Technology, for example. By using an LED as a light source, it becomes possible to suppress the occurrence of curing deficiency of the ink as a result of melting of the ink due to radiation heat of the light source.

The irradiation of ultraviolet rays is performed such that the peak illuminance of ultraviolet rays having a wavelength of 370 to 410 nm on the surface of the resist film is preferably 0.5 to 10 W/cm², and more preferably 1 to 5 W/cm². From the viewpoint of preventing the ink from being irradiated with radiation heat, the amount of light to irradiate the resist film is preferably less than 500 mJ/cm².

In this step, the landed ink is irradiated with an active ray to cure the ink in an atmosphere with an oxygen concentration in the range of 0.1 to 10.0% by volume. The irradiation of the active ray is performed preferably within a time period of from 0.001 to 300 second after the landing of the ink from the viewpoint of improving the curability of the ink, and more preferably within a time period of 0.001 to 60 second or less after the landing from the viewpoint of forming a high-definition image.

The oxygen concentration is in the range of 0.1 to 10.0% by volume. From the viewpoint of reducing blooming, the oxygen concentration is preferably in the range of 0.5 to 8.0% by volume, more preferably in the range of 0.5 to 6.0% by volume.

### <Step (3)>

Step (3) is a step of heating the temporarily cured thermosetting inkjet ink to perform main curing. After the temporary curing in (2), the ink is further heated for main curing.

The heating method is preferably, for example, to charge into an oven set in a range of 110 to 180°C for 10 to 60 minutes.

The thermally curable ink-jet ink can be used not only as the ink for forming a solder resist pattern described above, but also as an adhesive, a sealing agent. a circuit protectant, and the like for electronic components.

### EXAMPLES

Hereinafter, the present invention will be specifically described with reference to examples, but the present invention is not limited thereto. In the following examples, unless otherwise specified, the operations were performed at room temperature (25°C). Unless otherwise specified, "%" and "part" mean "% by mass" and "parts by mass", respectively.

### [Example 1]

### <Preparation of Yellow Pigment Dispersion>

The following dispersant 1, dispersant 2, and dispersion medium were placed in a stainless steel beaker, heated on a hot plate at 65°C, stirred and dissolved for 1 hour, cooled to room temperature, and then the following pigment was added thereto, and the mixture was placed in a glass bottle together with 200 g of zirconia beads having a diameter of 0.5 mm and sealed tightly. This was dispersed using a paint shaker until the desired particle size was achieved, and the zirconia beads were removed.

| | |
|---|---|
| Dispersant 1: EFKA7701 (manufactured by BASF Japan Ltd.) | 5.6 parts by mass |
| Dispersant 2: Solsperce 22000 (manufactured by The Lubrizol Corporation) | 0.4 parts by mass |
| Dispersion medium: dipropylene glycol diacrylate (containing 0.2% UV-10) | 80.6 parts by mass |
| Pigment: PY185 (manufactured by BASF Japan Ltd., Paliotol Yellow D1155) | 13.4 parts by mass |

### <Preparation of Cyan Pigment Dispersion>

In the preparation of the yellow pigment dispersion, the dispersant, the dispersion medium and the pigment were prepared in the same manner except that they were changed as shown below.

| | |
|---|---|
| Dispersant: EFKA7701 (manufactured by BASF Japan Ltd.) | 7 parts by mass |
| Dispersion medium: dipropylene glycol diacrylate (containing 0.2% UV-10) | 70 parts by mass |
| Pigment: PB15:4 (manufactured by Dainichiseika Color & ChemicalsMfg.Co.,Ltd., Chromofine Blue 6332JC) | 23 parts by mass |

### <Photopolymerizable Compound>

The following photopolymerizable compounds were used.
a1: tripropylene glycol diacrylate (Molecular weight 300)
a2: Trimethylolpropane triacrylate (molecular weight 296)
a3: Neopentyl glycol diacrylate (molecular weight 212)
a4: 2PO-modified neopentylglycol diacrylate (molecular weight 328)

### <Thermosetting Compound>

The following thermosetting compounds were used.

### (Block Isocyanates (Aliphatic Polyisocyanates))

b1: trixene BI7982 (manufactured by LANXESS AG) (molecular weight 793)
b2: trixene BI7961 (manufactured by LANXESS AG) (molecular weight 793)
b3: EA-1010N (Bisphenol A epoxy acrylate) (manufactured by SHIN-NAKAMURA CHEMICAL Co., Ltd.) (molecular weight 400)
b4: YD-127 (manufactured by Nippon Steel Chemical & Material Co. Ltd.) (Molecular weight 793)

### (Aliphatic Epoxide)

b5: 4-hydroxybutyl acrylate glycidyl ether (BMI-1000 manufactured by Nippon Kasei Chemical Co. Ltd)

### (Molecular weight 793)

### (Compound having Maleimide Group)

b6: 4,4'-diphenylmethane bismaleimide (BMI-1000 manufactured by Daiwakasei Industry Co., Ltd.)

### (Molecular weight 793)

### <Photopolymerization Initiator>

The following photopolymerization initiators were used.

### (Acylphosphine-based Initiator)

c1: Omnirad TPO H (manufactured by IGM Resins B.V.) (molecular weight 348)
c2: Omnirad 819 (manufactured by IGM Resins B.V.) (molecular weight 419)

### (Aminoacetophenone-based Initiator)

C3: Omnirad 907 (manufactured by IGM Resins B.V.) (molecular weight 279)
C4: Omnirad 379 (manufactured by IGM Resins B.V.) (molecular weight 381)

### (Thioxanthone-based Initiator)

c5: 2-isopropylthioxanthone (ITX: molecular weight 254)
C6: 2,4-diethylthioxanthone (DETX: molecular weight 268)

### <Gelling Agent>

The following gelling agents were used.
d1: distearyl ketone (Molecular weight 507)
d2: behenyl behenate (Molecular weight 199)

### <Preparation of Inkjet Ink>

The ink compositions listed in Tables I to II below were added to 3.0 g of yellow pigment dispersion and 1.0 g of cyan pigment dispersion, and the inkjet inks were prepared. The inkjet inks were filtered through a Teflon (registered trademark) 3 µm membrane filter manufactured by ADVATEC. The viscosity at 80°C and the gel phase transition temperature of each ink were measured with a viscoelasticity meter MCR300 manufactured by Physica Messtechnik GmbH at a shear rate of 1000 (1/s).

The gel phase transition temperature here represents a temperature at a complex viscosity of 1 Pa or more in the viscoelasticity curve which is obtained by changing the temperature at a cooling rate of 0.1°C/s, a strain of 5%, an angular frequency of 10 radian/s, and a cooling rate of 0.1°C/s.

The viscosity at 25°C of each of the inks of the present invention was 1 to 1 × 10⁴ Pa·s, whereas the viscosity of each of Comparative Examples was less than 1 Pa·s.

Further, the gel phase transition temperature of each of the inks of the present invention was 40 to 100°C, but the gel phase transition phenomenon was not observed in the inks of Comparative Examples.

### <Pattern Formation by Inkjet>

Each ink-jet ink prepared was loaded in an ink-jet recording apparatus having ink-jet recording heads each equipped with piezo type ink-jet nozzles. Using this apparatus, a pattern was formed on a copper-clad laminate for a printed wiring board (FR-4 thickness 1.6 mm, size 150 mm × 95 mm).

The ink supplying system used had ink tanks, ink flow paths, sub-ink tanks immediately before the ink-jet recording heads, metal filter-attached piping, and piezo heads. The area from the ink tanks to the head portion was warmed to 90°C. The ink temperature in the recording head was warmed to 90°C by heating using a heater disposed inside the piezo head. The piezo head had a nozzle diameter of 22 µm, and heads having a nozzle resolution of 360 dpi were arranged in a staggered pattern to form nozzle arrays of 720 dpi.

Using this ink-jet apparatus, a voltage was applied so that the amount of droplets would be dots of 6.0 pl, a solid pattern of 20 mm × 50 mm and a comb pattern of 100 µm in line and space were printed on a substrate so that their respective thicknesses would be 20 µm, and then the ink layer was temporarily cured by irradiation with an LED lamp (395 nm, 8 W/cm², water cooled unit) manufactured by Phoseon Technology at 500 mJ/cm². After that, it was put into an oven set at 150°C for 60 minutes for main curing, and a print sample was obtained.

### [Evaluation]

### <Substrate Adhesion>

With respect to the print sample of the prepared solid pattern, cuts were made in a grid pattern in the cured film in accordance with the cross-cut method of JIS K5600, an adhesive tape was attached and peeled off, the peeled state of the cured film was observed, the adhesion residual ratio was determined by the following method, and evaluation was performed in accordance with the following criteria. Here, the adhesion residual rate is calculated using the number of squares created by making cuts as the denominator and the number of squares remaining in the tape peeling as the numerator.

### (Criteria)

6: Adhesion residual rate 100%
5: Adhesion residual rate 90% or more and less than 100%
4: Adhesion residual rate 70% or more and less than 90%
3: Adhesion residual rate 50% or more and less than 70%
2: Adhesion residual rate 25% or more and less than 50%
1: Adhesion residual rate less than 25%

### <Surface Tackiness>

With respect to the print sample of the prepared solid pattern, in accordance with the method of "JIS K5701-1 6.2.3 Abrasion Resistance test", a piece of coated printing paper cut in a size of 4 cm² was placed on the image and rubbed with a load of 500 g. After that, the degree of image density reduction was visually observed and evaluated according to the following criteria. The results are shown in Table 3.

### (Criteria)

4: No change in the image or coloration on the printing coated paper was observed at all even after rubbing more than 50 times.
3: No change in the image was observed but some coloration on the coated paper for printing was observed after rubbing more than 50 times.
2: Image density was reduced after rubbing 50 times, but was acceptable for practical use.
1: Image density was obviously reduced after rubbing less than 50 times, and the quality was unacceptable for practical use.

### <Pencil Hardness>

With respect to the print sample of the prepared solid pattern, surface pencil hardness was measured in accordance with the method of JIS K-5400. The evaluation was made based on the following criteria.

### (Criteria)

5: Pencil Hardness 6H or more
4: Pencil Hardness 5H
3: Pencil Hardness 4H
2: Pencil Hardness 3H
1: Pencil Hardness 2H or less

These results are shown in Tables I to II.

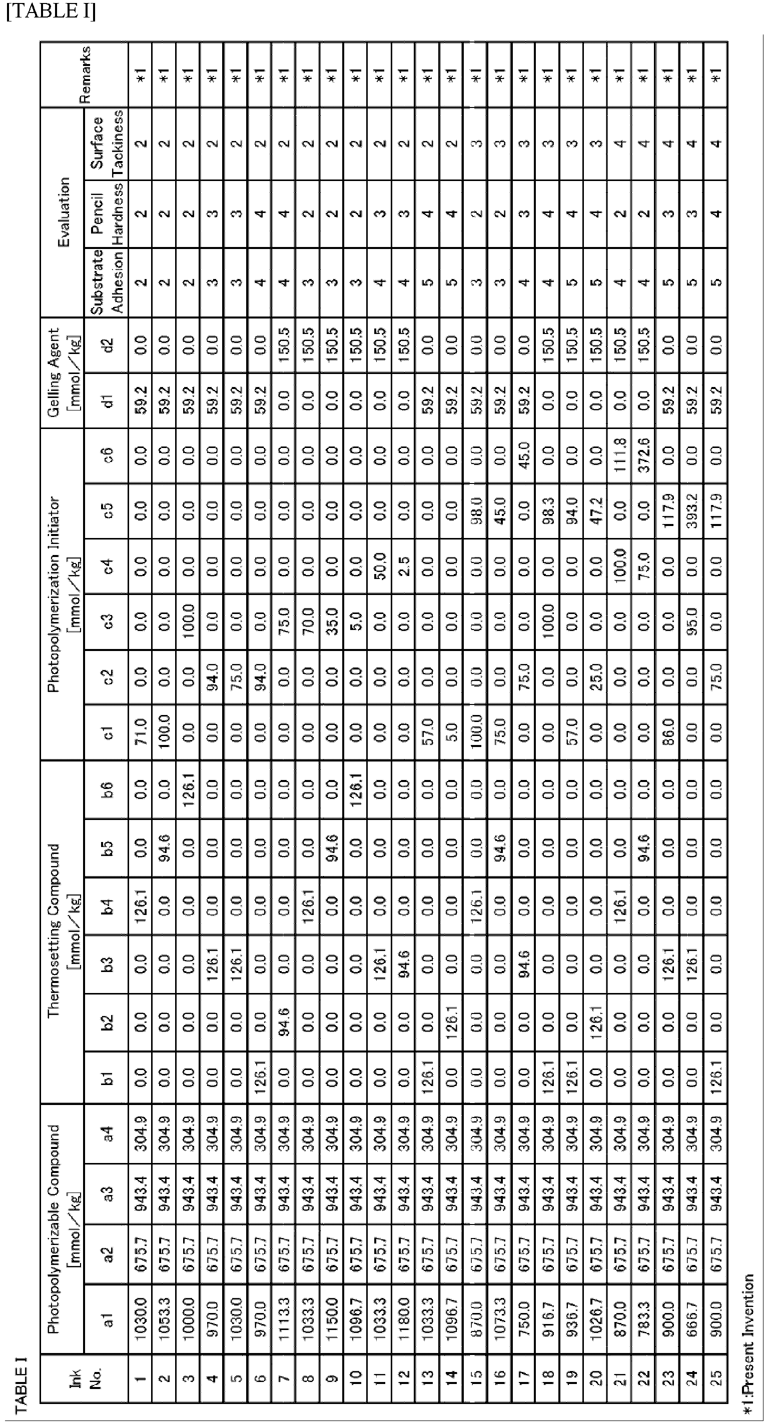

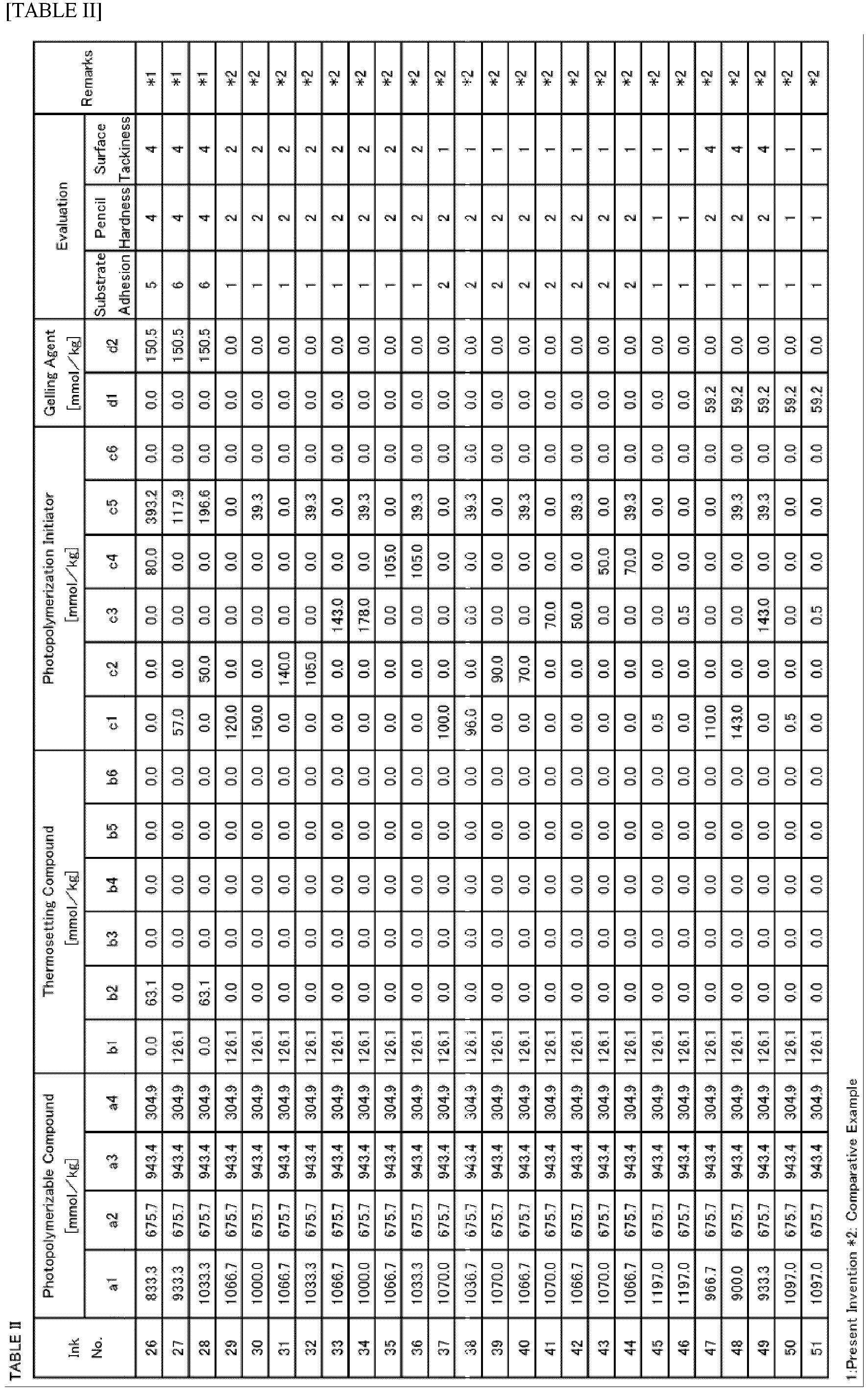

As shown in Tables I to II, the thermosetting inkjet inks of the present invention have superior substrate adhesion, surface hardness, and surface tackiness compared to the inks of comparative examples.

### [Example 2]

### <Preparation of Inkjet Ink>

The ink compositions listed in Tables III to V below were added to 3.0 g of yellow pigment dispersion and 1.0 g of cyan pigment dispersion, and the inkjet inks were prepared. The inkjet inks were filtered through a Teflon 3µm membrane filter manufactured by ADVATEC.

### <Pattern Formation by Inkjet>

Each ink-jet ink prepared was loaded in an ink-jet recording apparatus having ink-jet recording heads each equipped with piezo type ink-jet nozzles. Using this apparatus, a pattern was formed on a copper-clad laminate for a printed wiring board (FR-4 thickness 1.6 mm, size 150 mm × 95 mm).

The ink supplying system used had ink tanks, ink flow paths, sub-ink tanks immediately before the ink-jet recording heads, metal filter-attached piping, and piezo heads. The area from the ink tanks to the head portion was warmed to 90°C. The ink temperature in the recording head was warmed to 90°C by heating using a heater disposed inside the piezo head. The piezo head had a nozzle diameter of 22 µm, and heads having a nozzle resolution of 360 dpi were arranged in a staggered pattern to form nozzle arrays of 720 dpi.

Using this ink-jet apparatus, a voltage was applied so that the amount of droplets would be dots of 6.0 pl, a solid pattern of 20 mm × 50 mm and a comb pattern of 100 µm in line and space were printed on a substrate so that their respective thicknesses would be 20 µm, and then the ink layer was temporarily cured by irradiation with an LED lamp (395 nm, 8 W/cm², water cooled unit) manufactured by Phoseon Technology at 500 mJ/cm².

However, it was different from Example 1 in that the above active light irradiation was performed while controlling the oxygen concentration to 3.0% by volume.

The oxygen concentration was controlled as described in FIG. 2 of WO 2017/164164 A1. A gas supply nozzle was placed between the inkjet head and the light source, and a nitrogen gas generator (manufactured by Kofloc Corp., N2 IMPACT) at a pressure of 0.5 MPa·s was connected to flow nitrogen (N₂) gas.

After that, it was put into an oven set at 150°C for 60 minutes for main curing, and a print sample was obtained.

With respect to the obtained print sample, the evaluations in Example 1 were performed in the same manner. The obtained results are shown in Tables III to V.

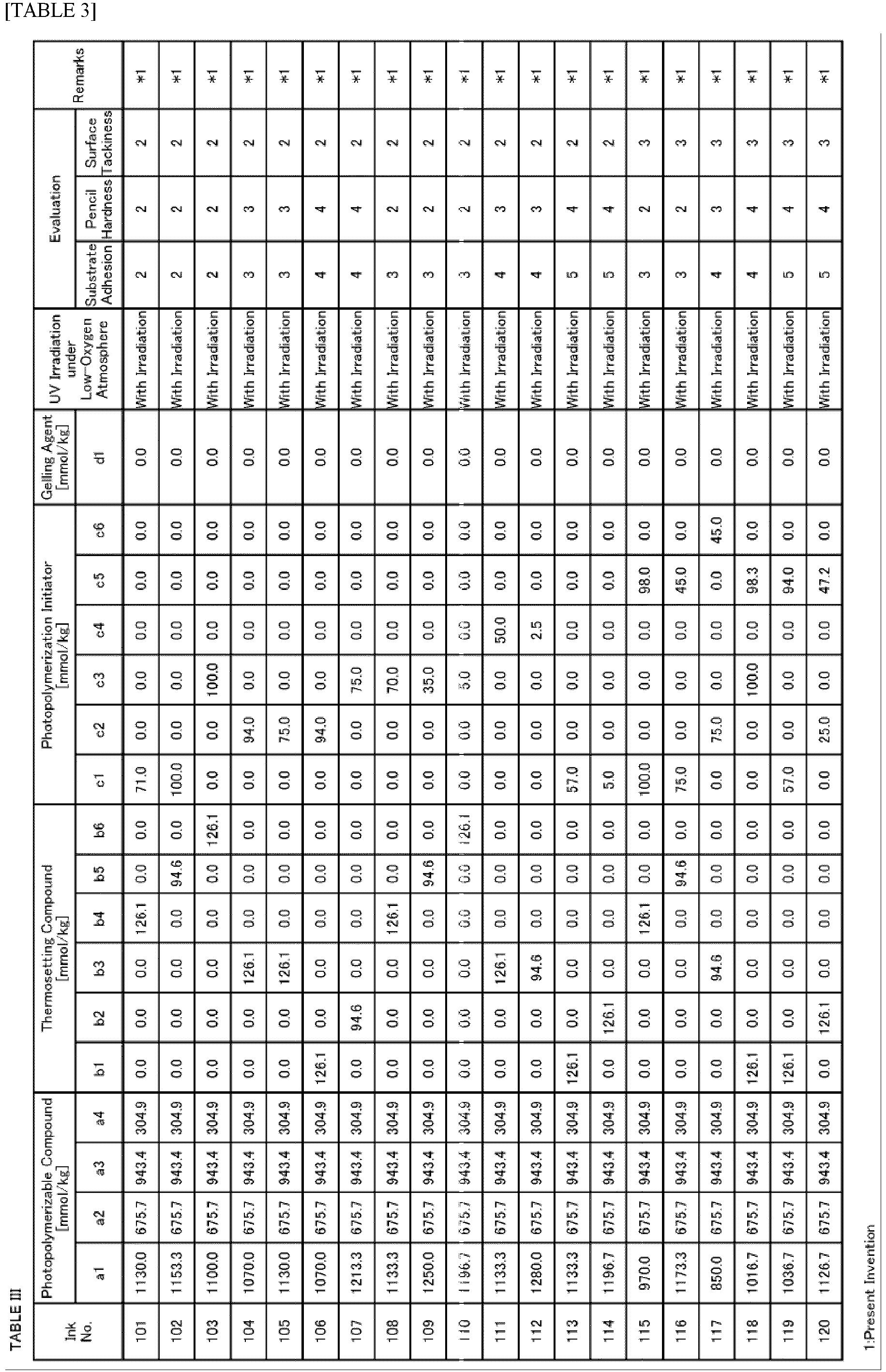

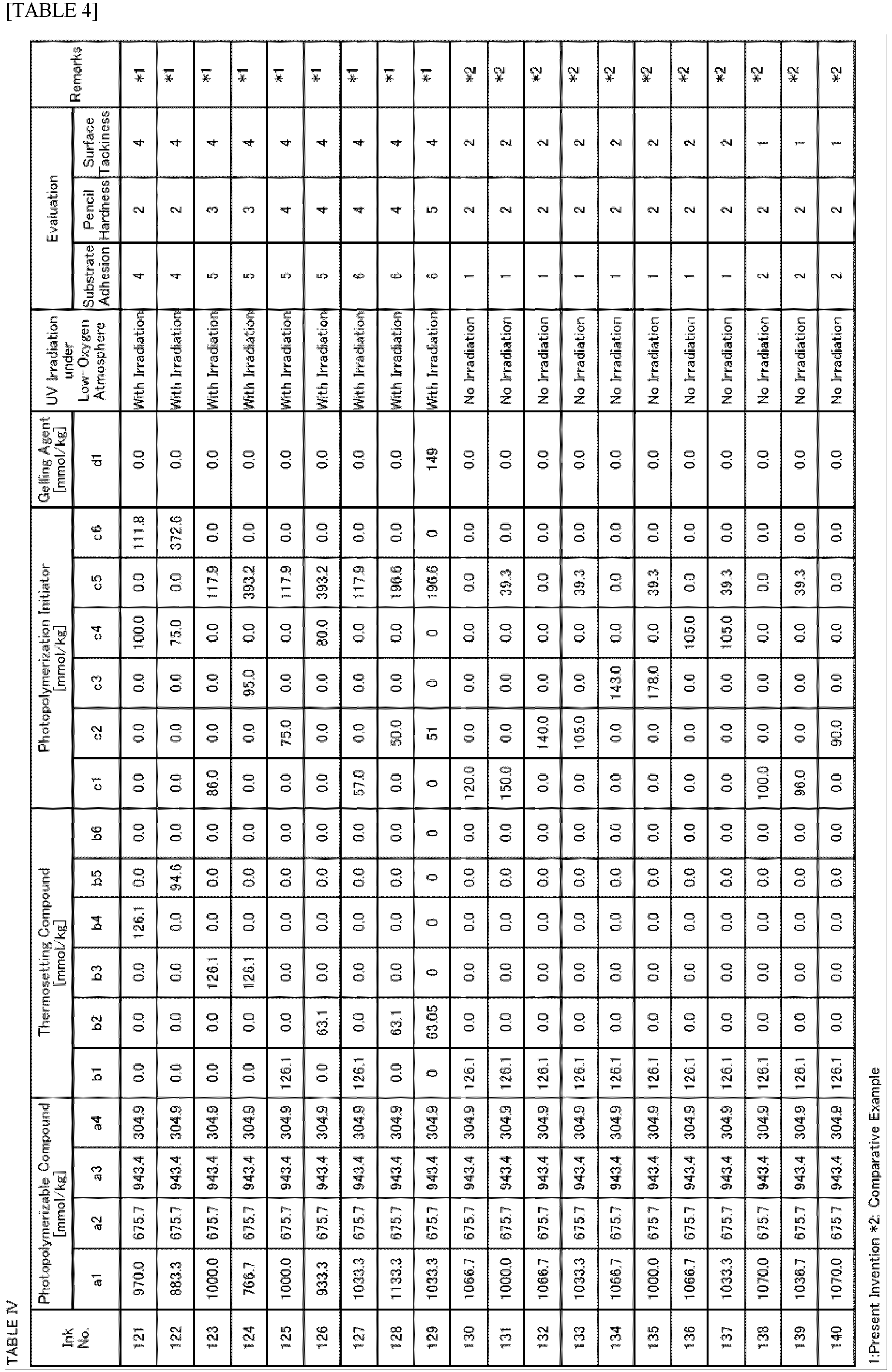

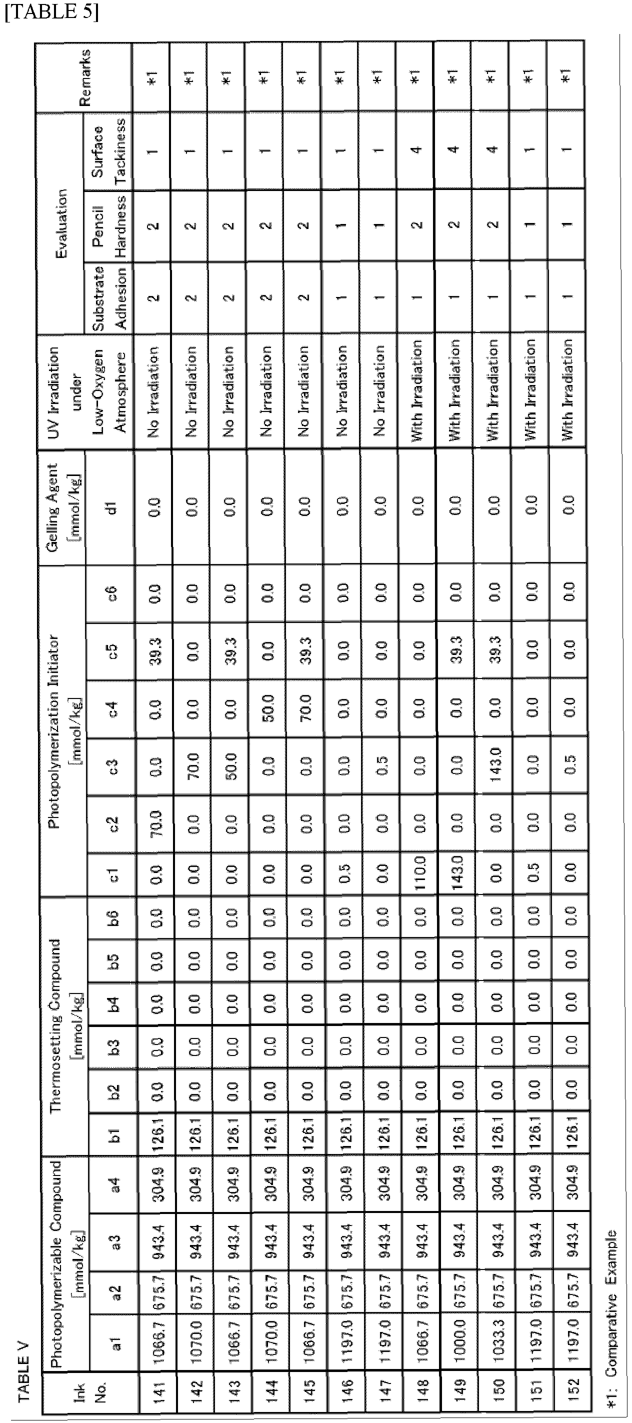

As shown in Tables III to V, it is recognized that both substrate adhesion and surface tackiness can be obtained while surface hardness is high even without a gelling agent by a printing method of the present invention including temporary curing by active light irradiation in a low oxygen atmosphere to increase surface curability while suppressing the degree of internal polymerization. This results in better substrate adhesion, surface hardness, and surface tackiness compared to the ink of Comparative Examples.

### INDUSTRIAL APPLICABILITY

The thermosetting inkjet ink of the present invention can be preferably applied to solder resist for printed circuit boards, since it can form a coating layer having excellent substrate adhesion, high surface hardness, and good surface tackiness.

## Claims

1. A thermosetting inkjet ink including a thermosetting compound,
the thermosetting inkjet ink comprising a photopolymerizable compound, a thermosetting compound, a photopolymerization initiator, and a gelling agent,
the photopolymerization initiator being an acylphosphine-based initiator or an aminoacetophenone-based initiator,
the thermosetting inkjet ink including the photopolymerization initiator at a content in a range of 1 to 70 mmol/kg, and
the thermosetting inkjet ink undergoing a sol-gel phase transition depending on temperature.

2. The thermosetting inkjet ink according to claim 1, wherein the thermosetting compound is a block isocyanate that is a polyisocyanate blocked by a blocking agent.

3. The thermosetting inkjet ink according to claim 2, wherein the polyisocyanate is an aliphatic polyisocyanate.

4. The thermosetting inkjet ink according to any one of claims 1 to 3, further comprising a thioxanthone-based initiator as a photopolymerization initiator in a range of 40 to 400 mmol/kg.

5. The thermosetting inkjet ink according to any one of claims 1 to 3, further comprising a thioxanthone-based initiator as a photopolymerization initiator in a range of 100 to 400 mmol/kg.

6. A printing method using a thermosetting inkjet ink,
the thermosetting inkjet ink including a photopolymerizable compound, a thermosetting compound, and a photopolymerization initiator,
the photopolymerization initiator being an acylphosphine-based initiator or an aminoacetophenone-based initiator,
the thermosetting inkjet ink including the photopolymerization initiator at a content in a range of 1 to 100 mmol/kg, and
the printing method comprising following steps (1) to (3):
(1) a step of discharging the thermosetting inkjet ink from a nozzle and landing it on a recording medium;
(2) a step of temporarily curing by irradiating the thermosetting inkjet ink that has been landed with an active ray in an atmosphere with an oxygen concentration in a range of 0.1 to 10.0% by volume; and
(3) a step of main curing by heating the thermosetting inkjet ink that has been temporarily cured after step (2).

7. The printing method according to claim 6, wherein the thermosetting compound is a block isocyanate that is a polyisocyanate blocked by a blocking agent.

8. The printing method according to claim 7, wherein the polyisocyanate is an aliphatic polyisocyanate.

9. The printing method according to any one of claims 6 to 8, wherein the content of the photopolymerization initiator is in a range of 1 to 70 mmol/kg.

10. The printing method according to any one of claims 6 to 9, wherein the thermosetting inkjet ink further comprises a thioxanthone-based initiator as a photopolymerization initiator in a range of 40 to 400 mmol/kg.

11. The printing method according to any one of claims 6 to 9, wherein the thermosetting inkjet ink further comprises a thioxanthone-based initiator as a photopolymerization initiator in a range of 100 to 400 mmol/kg.

12. The printing method according to any one of claims 6 to 11, wherein the thermosetting inkjet ink comprises a gelling agent.

## Patentansprüche

1. Eine wärmehärtbare Tintenstrahltinte, die eine wärmehärtbare Verbindung enthält,
wobei die thermisch härtbare Tintenstrahltinte eine photopolymerisierbare Verbindung, eine thermisch härtbare Verbindung, einen Photopolymerisationsinitiator und ein Geliermittel umfasst,
wobei der Photopolymerisationsinitiator ein Initiator auf Acylphosphinbasis oder ein Initiator auf Aminoacetophenonbasis ist,
wobei die wärmehärtbare Tintenstrahltinte den Photopolymerisationsinitiator in einem Gehalt im Bereich von 1 bis 70 mmol/kg enthält und
wobei die thermisch härtbare Tintenstrahltinte in Abhängigkeit von der Temperatur einen Sol-Gel-Phasenübergang durchläuft.

2. Die wärmehärtbare Tintenstrahltinte gemäß Anspruch 1, wobei die wärmehärtbare Verbindung ein Blockisocyanat ist, das ein durch ein Blockierungsmittel blockiertes Polyisocyanat ist.

3. Die wärmehärtbare Tintenstrahltinte gemäß Anspruch 2, wobei das Polyisocyanat ein aliphatisches Polyisocyanat ist.

4. Die wärmehärtbare Tintenstrahltinte gemäß einem der Ansprüche 1 bis 3, die ferner einen Initiator auf Thioxanthonbasis als Photopolymerisationsinitiator in einem Bereich von 40 bis 400 mmol/kg umfasst.

5. Die wärmehärtbare Tintenstrahltinte gemäß einem der Ansprüche 1 bis 3, die ferner einen Initiator auf Thioxanthonbasis als Photopolymerisationsinitiator in einem Bereich von 100 bis 400 mmol/kg umfasst.

6. Druckverfahren unter Verwendung einer wärmehärtbaren Tintenstrahltinte,
wobei die thermisch härtbare Tintenstrahltinte eine photopolymerisierbare Verbindung, eine thermisch härtbare Verbindung und einen Photopolymerisationsinitiator enthält,
wobei der Photopolymerisationsinitiator ein Initiator auf Acylphosphinbasis oder ein Initiator auf Aminoacetophenonbasis ist,
wobei die wärmehärtbare Tintenstrahltinte den Photopolymerisationsinitiator in einem Gehalt im Bereich von 1 bis 100 mmol/kg enthält, und
wobei das Druckverfahren die folgenden Schritte (1) bis (3) umfasst:
(1) einen Schritt des Ausstoßens der thermisch härtbaren Tintenstrahltinte aus einer Düse und des Aufbringens auf ein Aufzeichnungsmedium;
(2) einen Schritt des vorübergehenden Aushärtens durch Bestrahlen der aufgebrachten wärmehärtbaren Tintenstrahltinte mit einem aktiven Strahl in einer Atmosphäre mit einer Sauerstoffkonzentration im Bereich von 0,1 bis 10,0 Vol.-%; und
(3) einen Schritt der Haupthärtung durch Erhitzen der wärmehärtbaren Tintenstrahltinte, die nach Schritt (2) vorübergehend gehärtet wurde.

7. Das Druckverfahren gemäß Anspruch 6, wobei die wärmehärtbare Verbindung ein Blockisocyanat ist, das ein durch ein Blockierungsmittel blockiertes Polyisocyanat ist.

8. Das Druckverfahren gemäß Anspruch 7, wobei das Polyisocyanat ein aliphatisches Polyisocyanat ist.

9. Das Druckverfahren gemäß einem der Ansprüche 6 bis 8, wobei der Gehalt des Photopolymerisationsinitiators in einem Bereich von 1 bis 70 mmol/kg liegt.

10. Das Druckverfahren gemäß einem der Ansprüche 6 bis 9, wobei die thermisch härtbare Tintenstrahltinte ferner einen Initiator auf Thioxanthonbasis als Photopolymerisationsinitiator in einem Bereich von 40 bis 400 mmol/kg umfasst.

11. Das Druckverfahren nach einem der Ansprüche 6 bis 9, wobei die wärmehärtbare Tintenstrahltinte ferner einen Initiator auf Thioxanthonbasis als Photopolymerisationsinitiator in einem Bereich von 100 bis 400 mmol/kg umfasst.

12. Das Druckverfahren gemäß einem der Ansprüche 6 bis 11, wobei die wärmehärtbare Tintenstrahltinte ein Geliermittel umfasst.

## Revendications

1. L'encre thermodurcissable à jet d'encre comprenant un composé thermodurcissable,
l'encre thermodurcissable à jet d'encre comprenant un composé photopolymérisable, un composé thermodurcissable, un initiateur de photopolymérisation et un agent gélifiant,
l'initiateur de photopolymérisation étant un initiateur à base d'acylphosphine ou un initiateur à base d'aminoacétophénone,
l'encre thermodurcissable à jet d'encre comprenant l'initiateur de photopolymérisation à une teneur dans une plage de 1 à 70 mmol/kg, et
l'encre thermodurcissable à jet d'encre subissant une transition de phase sol-gel en fonction de la température.

2. L'encre thermodurcissable à jet d'encre selon la revendication 1, dans laquelle le composé thermodurcissable est un isocyanate de blocage qui est un polyisocyanate bloqué par un agent bloquant.

3. L'encre thermodurcissable à jet d'encre selon la revendication 2, dans laquelle le polyisocyanate est un polyisocyanate aliphatique.

4. L'encre thermodurcissable à jet d'encre selon l'une quelconque des revendications 1 à 3, comprenant en outre un initiateur à base de thioxanthone comme un initiateur de photopolymérisation dans une plage de 40 à 400 mmol/kg.

5. L'encre thermodurcissable à jet d'encre selon l'une quelconque des revendications 1 à 3, comprenant en outre un initiateur à base de thioxanthone comme un initiateur de photopolymérisation dans une plage de 100 à 400 mmol/kg.

6. Procédé d'impression utilisant une encre thermodurcissable à jet d'encre,
l'encre thermodurcissable à jet d'encre comprenant un composé photopolymérisable, un composé thermodurcissable et un initiateur de photopolymérisation,
l'initiateur de photopolymérisation étant un initiateur à base d'acylphosphine ou un initiateur à base d'aminoacétophénone,
l'encre thermodurcissable à jet d'encre comprenant l'initiateur de photopolymérisation à une teneur dans une plage de 1 à 100 mmol/kg, et
le procédé d'impression comprenant des étapes suivantes (1) à (3) :
(1) une étape de déchargement de l'encre thermodurcissable à jet d'encre à partir d'une buse et la déposer sur un support d'enregistrement ;
(2) une étape de durcissement temporaire par irradiation de l'encre thermodurcissable à jet d'encre qui a été déposée avec un rayon actif dans une atmosphère avec une concentration en oxygène dans une plage de 0,1 à 10,0 % en volume ; et
(3) une étape de durcissement principal par chauffage de l'encre thermodurcissable à jet d'encre qui a été durcie temporairement après l'étape (2).

7. Procédé d'impression selon la revendication 6, dans lequel le composé thermodurcissable est un isocyanate de blocage qui est un polyisocyanate bloqué par un agent bloquant.

8. Procédé d'impression selon la revendication 7, dans lequel le polyisocyanate est un polyisocyanate aliphatique.

9. Procédé d'impression selon l'une quelconque des revendications 6 à 8, dans lequel la teneur en initiateur de photopolymérisation est dans une plage de 1 à 70 mmol/kg.

10. Procédé d'impression selon l'une quelconque des revendications 6 à 9, dans lequel l'encre thermodurcissable à jet d'encre comprend en outre un initiateur à base de thioxanthone comme un initiateur de photopolymérisation dans une plage de 40 à 400 mmol/kg.

11. Procédé d'impression selon l'une quelconque des revendications 6 à 9, dans lequel l'encre thermodurcissable à jet d'encre comprend en outre un initiateur à base de thioxanthone comme un initiateur de photopolymérisation dans une plage de 100 à 400 mmol/kg.

12. Procédé d'impression selon l'une quelconque des revendications 6 à 11, dans lequel l'encre thermodurcissable à jet d'encre comprend un agent gélifiant.
